# EUROPÄISCHE PATENTSCHRIFT

(11) **EP 1 857 343 B1**
(45) Veröffentlichungstag und Bekanntmachung des Hinweises auf die Patenterteilung: **01.07.2009**
(21) Anmeldenummer: 07405095.6
(22) Anmeldetag: 21.03.2007
(51) Int. Cl.: B61G 11/18

(54) **Puffer für Schienenfahrzeuge**
Buffer for railway vehicles
Tampon pour véhicules sur rail

(30) Priorität: 15.05.2006 CH 7762006
(43) Veröffentlichungstag der Anmeldung: 21.11.2007
(73) Patentinhaber: Schwab Verkehrstechnik AG, 8207 Schaffhausen (CH)
(72) Erfinder: Weber, Robert, 8203 Schaffhausen (CH); Siegrist, Gérald, 8400 Winterthur (CH)
(74) Vertreter: Rottmann, Maximilian

(56) Entgegenhaltungen:
- EP-A- 1 038 751
- EP-A- 1 083 105
- DE-A1- 3 841 200
- DE-C1- 4 337 257

## Beschreibung

Die Erfindung betrifft einen Puffer für Schienenfahrzeuge nach dem Oberbegriff des Anspruchs 1 sowie ein Verfahren zu dessen Herstellung gemäss dem Oberbegriff des Anspruchs 10.

Derartige Puffer sind in verschiedensten Ausführungsformen bekannt. Während der Puffer im Normalfall eine einstückig ausgebildete Pufferhülse aufweist, besteht der Pufferstössel üblicherweise aus einem Stösselrohr und dem eigentlichen Pufferteller, der am vorderen Ende des Stösselrohrs angeschweisst oder angeschraubt ist. Damit der Puffer, bzw. die Schweissnaht zwischen Pufferteller und Stösselrohr, hohe und insbesondere auch exzentrisch auftretende Kräfte aufnehmen kann/können, sind die bis anhin eingesetzten Puffer mit einem relativ dickwandigen Stösselrohr und einem Pufferteller mit angeschmiedetem Kragen und aufwendigen Schweissnahtvorbereitungen versehen.

Aus der GB 240,659 ist ein gattungsgemässer Puffer für Schienenfahrzeuge bekannt. Der Puffer ist mit einer Hülse versehen, deren Ende sich zum Pufferteller hin radial erweitert. Der Pufferteller ist auf der Rückseite mit einer Ausnehmung versehen, in welche sich der radial erweiternde Abschnitt der Hülse erstreckt. Das Fixieren der Hülse erfolgt entweder durch Einpressen in die Ausnehmung oder durch einen Ring, der auf der Innenseite der Hülse im Bereich des sich radial erweiternden Abschnitts angebracht wird.

Aus der EP-A-1 083 105 ist ebenfalls ein gattungsgemässer Puffer für Schienenfahrzeuge bekannt, der mit einer am Schienenfahrzeug zu befestigenden Pufferhülse und einem über ein Federpaket an der Pufferhülse abgestützten Pufferstössel versehen ist. Das Stösselrohr ist an dem dem Pufferteller zugewandten Ende mit einem sich zum Pufferteller hin radial erweiternden Abschnitt versehen an dem der Pufferteller angeschweisst ist, wobei sowohl auf der Innenseite wie auch auf der Aussenseite eine umlaufende Schweissnaht angebracht ist. Obwohl sich ein derartiger Puffer in der Praxis sehr bewährt hat, ist das Anbringen der Schweissnaht, insbesondere auf der Innenseite des Stösselrohrs, mit grossem Aufwand verbunden.

In der EP-A-1 038 751 ist ein Puffer für Schienenfahrzeuge offenbart, der mit einem hohlzylindrischen Pufferstössel versehen ist. An der Vorderseite des Pufferstössels ist ein Pufferteller konventionell angeschweisst.

Schliesslich ist aus der DE-A-38 41 200 ein gesenk geschmiedetes Stützlager für eine Zugeinrichtung für Schienenfahrzeuge bekannt. Das Stützlager ist mit einem Flansch versehen, der durch ein Rohr verlängert wird. Das Rohr wird mittels Reibschweissverfahren an dem Flansch befestigt.

Die Erfindung zielt darauf ab, einen Puffer für Schienenfahrzeuge derart weiterzubilden, dass er einfacher und kostengünstiger hergestellt werden kann, wobei insbesondere das Verbinden des Stösselrohrs mit dem Pufferteller vereinfacht werden soll, und wobei die beim Schweissvorgang entstehende innere Schweisswulst die Axialbewegung der Pufferhülse in Relation zum Stösselrohr nicht behindern soll.

Hierzu wird nach der Erfindung ein Puffer gemäss dem Anspruch 1 bereitgestellt.

Durch das Vorsehen eines Puffertellers, der auf der Rückseite mit einem sich in axialer Richtung erstreckenden Kragen versehen ist, dessen Durchmesser auf den Durchmesser des Stösselrohrs abgestimmt ist und dessen Stösselrohr mittels einer Reibschweissverbindung an dem Kragen befestigt ist, wird die grundsätzliche Voraussetzung geschaffen, den Puffer schnell, einfach und kostengünstig zu fertigen. Indem das Stösselrohr in dem dem Pufferteller zugewandten Endbereich mit einem sich radial erweiternden Abschnitt versehen ist, der radial derart aufgeweitet ist, dass ein Freiraum für den beim Reibschweissen auf der Innenseite entstehenden Schweisswulst geschaffen wird, in welchen sich der innere Schweisswulst erstrecken kann, wird zudem sichergestellt, dass die beim Schweissvorgang entstehende innere Schweisswulst die Axialbewegung der Pufferhülse in Relation zum Stösselrohr nicht behindert. Daher braucht der innere Schweisswulst auch nicht nachbearbeitet zu werden, was sich sowohl festigkeitsmässig wie auch kostenmässig positiv auswirkt.

Das Reibschweissen ist ein sogenanntes Warmpress-Schweissverfahren, bei dem die Erwärmung der miteinander zu verbindenden, fest eingespannten Teile durch mechanische Reibung erfolgt. Die Reibung wird in der Regel durch eine Relativbewegung zwischen einem rotierenden und einem feststehenden Fügeteil erzeugt, welche unter Kraft ohne Zusatzwerkstoff zusammengeführt werden. Es entsteht ein für das Verfahren typischer Schweisswulst. Nach ausreichender Wärmeeinbringung wird die Relativbewegung aufgehoben und die beiden Fügetile unter hoher Kraft zusammengepresst. Dieses Reibschweissen hat gegenüber dem konventionellen Gas- oder Lichtbogenschweissen den Vorteil, dass keine Materialbeeinflussung durch Aufschmelzen des jeweiligen Teils im Bereich der Schweissnaht erfolgt. Zudem können verschiedene Werkstoffe ohne Zufügen eines Zusatzwerkstoffes miteinander verbunden werden.

Bevorzugte Ausführungsformen des Puffers sind in den abhängigen Ansprüchen 2 bis 9 umschrieben.

Im Anspruch 10 wird zudem ein Verfahren zur Herstellung eines gemäss dem Anspruch 1 ausgebildeten Puffers vorgeschlagen. Bevorzugte Varianten dieses Verfahrens sind in den abhängigen Ansprüchen 11 und 12 umschrieben.

Ein bevorzugtes Ausführungsbeispiel der Erfindung wird nachfolgend anhand einer Zeichnung näher erläutert. Darin zeigt:
Fig. 1 einen Längsschnitt durch einen erfindungsgemäss gestalteten Puffer im unbelasteten Ausgangszustand;
Fig. 2 einen Längsschnitt durch den Puffer im belasteten Zustand, und
Fig. 2a einen vergrösserten Ausschnitt aus der Fig. 2.

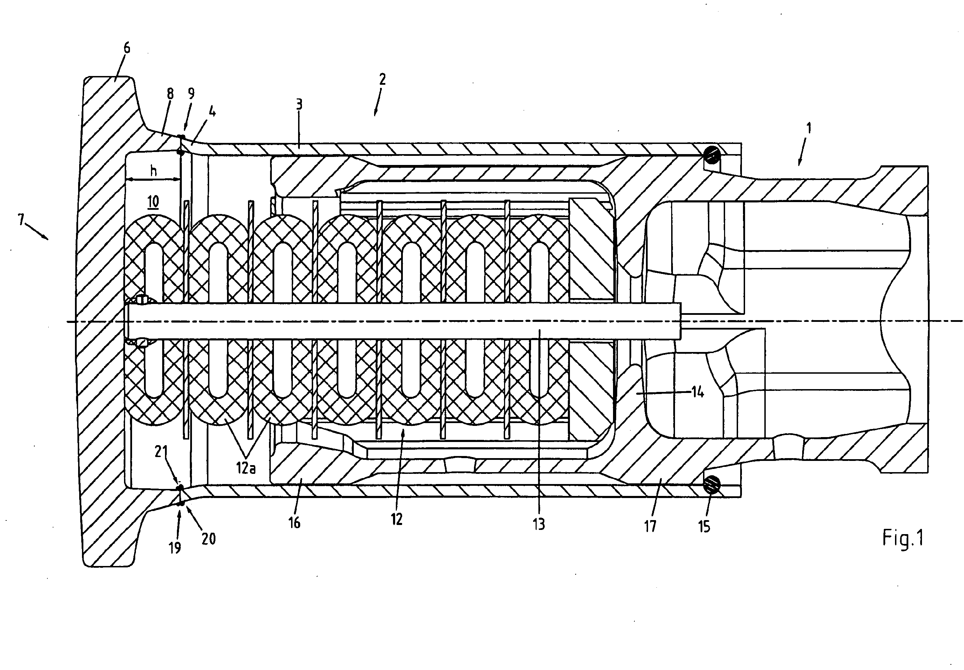

Anhand der Figur 1 wird der grundsätzliche Aufbau des Puffers näher erläutert. Der im unbelasteten Ausgangszustand dargestellte Puffer weist eine am Schienenfahrzeug (nicht dargestellt) zu befestigende Pufferhülse 1 sowie einen Pufferstössel 2 auf. Sowohl die Pufferhülse 1 wie auch der Pufferstössel 2 sind im wesentlichen hohlzylindrisch ausgebildet, wobei der Pufferstössel 2 koaxial zur Pufferhülse 1 angeordnet und in axialer Richtung gegenüber Letzterer verschiebbar ist. Der Pufferstössel 2 besteht im wesentlichen aus einem Stösselrohr 3 und einem endseitig daran angeschweissten Pufferteller 6. Das Stösselrohr 3 ist in dem dem Pufferteller 6 zugewandten Endbereich mit einem sich radial erweiternden Abschnitt 4 versehen, der vorzugsweise durch plastische Kaltverformung des Stösselrohrs 3 erzeugt wird. Der vorzugsweise als Gussteil ausgebildete Pufferteller 6 ist einstückig ausgebildet und weist eine bombierte Vorderseite 7 auf. Auf der Rückseite ist der Pufferteller 6 mit einem sich in axialer Richtung erstreckenden Kragen 8 versehen, der eine in die Rückseite des Puffertellers 6 eingelassene Ausnehmung 10 radial umschliesst. Somit wird die Ausnehmung 10 vom Kragen 8 radial umschlossen, wobei der Innendurchmesser der Ausnehmung 10 grösser ist als der Aussendurchmesser der Pufferhülse 1 in dem dem Pufferteller 6 zugewandten Endbereich. Jedenfalls kann sich der Endbereich der Pufferhülse 1 beim Einfedern des Puffers in diese Ausnehmung 10 erstrecken. Der Durchmesser und die Wandstärke des Kragens 8 im Bereich der Stirnseite 9 sind auf das Stösselrohr 3 bzw. dessen sich radial erweiternden Abschnitt 4 abgestimmt.

Der Pufferstössel 2 ist über eine Dämpfungseinrichtung in der Form eines vorgespannten Federpakets 12 derart an der Pufferhülse 1 abgestützt, dass er entgegen der Federkraft in Richtung der Pufferhülse 1 verschiebbar ist. Das Federpaket weist eine Vielzahl von Elastomerelementen 12a auf, die auf einen Bolzen 13 aufgeschoben sind und von diesem positioniert werden. Das Federpaket 12 stützt sich auf der einen Seite an einem auf der Innenseite der Pufferhülse 1 angeordneten Bund 14 ab, während es auf der anderen Seite am Boden der Ausnehmung 10 bzw. auf der Rückseite des Puffertellers 6 anliegt. In Ausschubrichtung wird der Hub des Pufferstössels 2 durch einen als Endanschlag wirkenden Sprengring 15 begrenzt. Die Pufferhülse ist mit zwei Abschnitten 16, 17 versehen, die eine zylindrische Oberfläche aufweisen und deren Durchmesser auf den Innendurchmesser des ebenfalls zylindrisch ausgebildeten Stösselrohrs 3 abgestimmt sind und der Führung des Stösselrohrs 3 beim axialen Verschieben dienen.

Der Pufferteller 6 ist mit seinem Kragen 8 an dem sich radial erweiternden Abschnitt 4 des Stösselrohrs 3 angeschweisst. Im vorliegenden Fall besteht die Verbindung zwischen dem Pufferteller bzw. dessen Kragen und dem Stösselrohr aus einer Reibschweissverbindung 19. Wie ersichtlich, bildet die Reibschweissverbindung 19 einen inneren und einen äusseren Schweisswulst 20, 21, welche den Kragen 8 bzw. das Stösselrohr 3 auf der Innen- und Aussenseite kreisringförmig umfassen.

Um die Relativbewegung des Stösselrohrs 3 gegenüber der Pufferhülse 1 beim Einschieben des Pufferstössels 2 nicht zu behindern, muss sichergestellt werden, dass sich der innere Schweisswulst 21 der Reibschweissverbindung 19 nicht in die Bewegungsebene der Pufferhülse 1 erstreckt. Im vorliegenden Beispiel wird dies dadurch erreicht, dass sich der innere Schweisswulst 21 in den sich radial erweiternden Abschnitt 4 des Stösselrohrs 3 erstreckt. Dazu ist der radial erweiternde Abschnitt des Stösselrohrs 3 derart dimensioniert, dass der innere Schweisswulst 21 in radialer Richtung nicht über die innere, zylindrische Mantelfläche des Stösselrohrs 3 vorsteht, sondern etwas zurückversetzt ist. Dadurch kann sichergestellt werden, dass die Pufferhülse 1 beim Einfedern des Puffers nicht mit dem inneren Schweisswulst 21 in Berührung kommt bzw. nicht an dieser ansteht, zumal sich die Stirnseite der Pufferhülse 1 beim maximalen Einschieben des Puffers an dem inneren Schweisswulst 21 vorbeibewegt und ggf. an der Rückseite des Puffertellers 6 anzuliegen kommt.

Die Höhe h des Kragens 8 in axialer Richtung wird insbesondere bestimmt durch den bei exzentrischer Krafteinleitung auftretenden Spannungsverlauf im Pufferteller 6. Der Kragen 8 muss so hoch sein, dass dessen Wandstärke auf die Wandstärke des Stösselrohrs 3 reduziert werden kann, ohne dass die zulässigen Spannungen im Kragen 8 überschritten werden. Jedenfalls beträgt die Höhe h des Kragens 8 in axialer Richtung mindestens 1/20, insbesondere jedoch mindestens 1/10 des Durchmessers des Stösselrohrs 3.

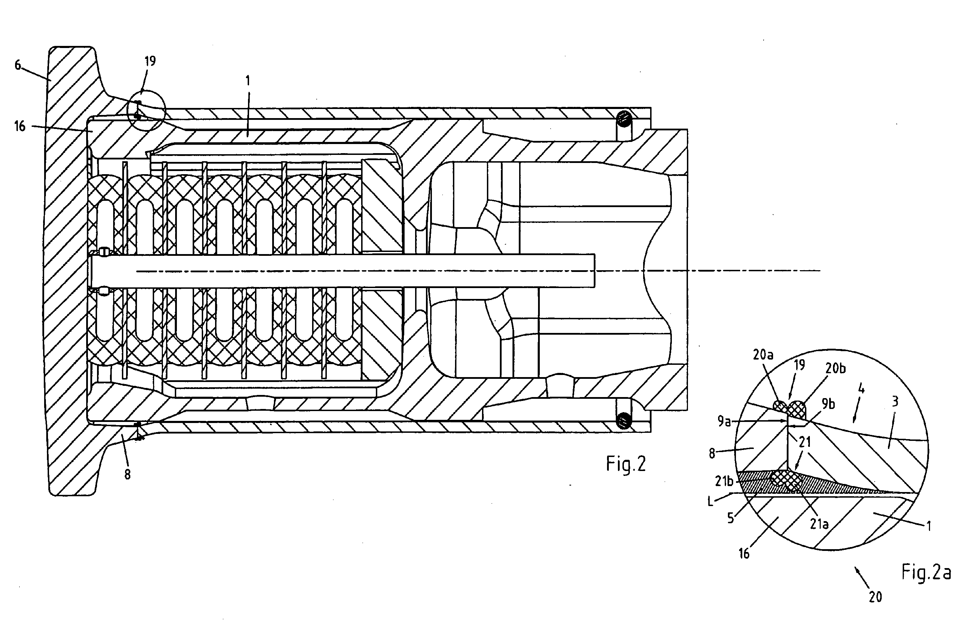

In der Fig. 2 ist der Puffer im vollständig eingeschobenen Zustand dargestellt. Wie ersichtlich, liegt die Stirnseite der Pufferhülse 1 bzw. des Abschnitts 16 innerhalb des Kragens 8 an der Rückseite des Puffertellers 6 an. Die Fig. 2a zeigt in vergrösserter Darstellung eine Detailansicht der Fig. 2 im Bereich der Reibschweissverbindung 19. Durch die Reibschweissverbindung 19 ist die Stirnseite 9a des Stösselrohrs 3 mit der Stirnseite 9b des Kragens 8 des Puffertellers 6 verschweisst. Beim Verschweissen des Stösselrohrs 3 mit dem Kragen 8 bilden sich auf der Aussenseite sowie der Innenseite je zwei Teilwülste 20a, 20b; 21, 21 b, welche die beiden Elemente 3, 8 kreisringförmig umfassen. Wie bereits erwähnt, ist der sich radial erweiternde Abschnitt des Stösselrohrs 3 insbesondere dazu vorgesehen, dass sich der innere Schweisswulst 21 in radialer Richtung in den sich radial erweiternden Abschnitt 4 des Stösselrohrs 3 erstrecken kann, so dass sie nicht über die innere, zylindrische Mantelfläche des Stösselrohrs 3 vorsteht. Die Ebene, in der sich die innere, zylindrische Mantelfläche des Stösselrohrs 3 erstreckt, ist andeutungsweise durch ein unterbrochene Linie L eingezeichnet. Wie ersichtlich, verläuft diese Linie L innerhalb der beiden Teilwülste 21 a, 21 b, womit sichergestellt ist, dass der innere Schweisswulst 21 in radialer Richtung nicht über die innere, zylindrische Mantelfläche des Stösselrohrs 3 vorsteht und die Pufferhülse 3 beim Einfedern des Puffers nicht mit dem inneren Schweisswulst 21 in Berührung kommt. Durch den sich radial erweiternden Abschnitt 4 des Stösselrohrs 3 wird ein schraffiert dargestellter Freiraum 5 geschaffen, in den sich der beim Reibschweissen auf der Innenseite entstehende Schweisswulst 21 erstrecken kann. Indem sich die beim Reibschweissvorgang entstehende innere Schweisswulst 21 in diesen Freiraum 5 erstrecken kann, wird die Axialbewegung der Pufferhülse 1 in Relation zum Stösselrohr 3 nicht behindert.

Durch das Vorsehen dieses sich radial erweiternden Abschnitts 4 braucht der innere Schweisswulst 21 nach dem Erzeugen der Reibschweissverbindung 19 nicht entfernt oder bearbeitet zu werden, was einerseits Kosten spart und andererseits keine Schwächung der Schweissverbindung zur Folge hat, da beim mechanischen Bearbeiten oder Abtragen der Schweisswulst 21 die Gefahr besteht, eine Kerbe mit entsprechender Kerbwirkung zu schaffen, was zu einer Verminderung der Festigkeit der Schweissverbindung führen würde. Neben der Schaffung eines Freiraums 5 hat der sich radial -konisch- zum Pufferteller 6 hin erweiternde Abschnitt 4 des Stösselrohrs 3 noch den weiteren Vorteil, dass dadurch die auf die Schweissnaht einwirkenden Spannungen reduziert werden, was u.a. einen positiven Einfluss auf die Dauerfestigkeit der Schweissnaht hat. Dies rührt in erster Linie daher, dass durch den sich radial erweiternden Abschnitt die bei exzentrischer Belastung auftretenden Biegespannungen reduziert werden können. Da die radiale Aufweitung des Stösselrohrs 3 vor dem eigentlichen Schweissvorgang erfolgt, kann der eigentliche Reibschweissvorgang sehr schnell und einfach durchgeführt werden, so dass der Puffer letztlich auch einfach und kostengünstig gefertigt werden kann.

Auf das eigentliche Reibschweissverfahren beim Verschweissen des Stösselrohrs 3 mit der Stirnseite des Kragens 8 des Puffertellers 6 wird an dieser Stelle nicht näher eingegangen. Es wird lediglich darauf hingewiesen, dass die Wandstärke des am Pufferteller 6 angeordneten Kragens 8 derart auf die Wandstärke des Stösselrohrs 3 abgestimmt ist, dass sich die beiden Teile 3, 8 durch die beim Reibschweissvorgang entstehende Reibungswärme in Bezug auf ihre Schmelztemperatur weitgehend gleichmässig erwärmen, so dass die beide Teile sicher miteinander "verschweisst" werden können. Natürlich kann durch die Dimensionierung des Kragens 8 ggf. Einfluss auf die mittels Reibung erzeugte absolute Temperatur des Kragens im Bereich seiner Stirnfläche und/oder auf die relative Temperatur des Kragens in Bezug auf das Stösselrohr 3 genommen werden. Jedenfalls hat das Vorsehen eines Kragens 8 am Pufferteller 6 den Vorteil, dass sich der Kragen 8, der ähnlich dimensioniert ist, wie das Stösselrohr 3, durch die Reibung lokal in einem analogen Ausmass erwärmt, wie das Stösselrohr 3. Zudem befindet sich die Schweissnaht in einem vergleichsweise tief beanspruchten Bereich, da die höchsten Beanspruchungen im Übergangsbereich zwischen der Pufferplatte 6 und dem 8 Kragen auftreten.

Es wird darauf hingewiesen, dass das vorgängige Ausführungsbeispiel lediglich eine mögliche Ausführungsform eines Puffers zeigt, dass jedoch im Rahmen des in den Patentansprüchen definierten Schutzumfangs durchaus von vorgängigem Beispiel abweichende Puffergestaltungen möglich sind.

## Patentansprüche

1. Puffer für Schienenfahrzeuge, mit einer am Schienenfahrzeug zu befestigenden Pufferhülse (1) und einem über eine Dämpfungseinrichtung (12) an der Pufferhülse (1) abgestützten, axial verschiebbaren Pufferstössel (2) mit einem Stösselrohr (3) und einem endseitig daran angeschweissten Pufferteller (6), **dadurch gekennzeichnet, dass** der Pufferteller (6) auf seiner Rückseite mit einem sich in axialer Richtung erstreckenden Kragen (8) versehen ist, dessen Durchmesser auf den Durchmesser des Stösselrohrs (3) abgestimmt ist, wobei das Stösselrohr (3) mittels einer Reibschweissverbindung (19) an dem Kragen (8) befestigt ist und wobei das Stösselrohr (3) in dem dem Pufferteller (6) zugewandten Endbereich mit einem sich radial erweiternden Abschnitt (4) versehen ist, der radial derart aufgeweitet ist, dass ein Freiraum (5) für den beim Reibschweissen auf der Innenseite entstehenden Schweisswulst (21) geschaffen wird, in welchen sich der innere Schweisswulst (21) erstrecken kann.

2. Puffer nach Anspruch 1, **dadurch gekennzeichnet, dass** sich der zur Aufnahme der inneren Schweisswulst (21) vorgesehene Freiraum (5) zum Kragen (8) hin konisch erweitert.

3. Puffer nach Anspruch 1 oder 2, **dadurch gekennzeichnet, dass** das Stösselrohr (3) überwiegend hohlzylindrisch ausgebildet ist und der innere Schweisswulst (21) in radialer Richtung gegenüber der inneren, zylindrischen Mantelfläche des Stösselrohrs (3) zurückversetzt ist.

4. Puffer nach einem der vorhergehenden Ansprüche, **dadurch gekennzeichnet, dass** der Pufferteller (6) mit einer Ausnehmung (10) versehen ist, welche vom Kragen (8) radial umschlossen wird und in welche sich die Pufferhülse (1) beim Einfedern des Puffers erstrecken kann

5. Puffer nach Anspruch 4, **dadurch gekennzeichnet, dass** der Innendurchmesser der Ausnehmung (10) grösser ist als der Aussendurchmesser der Pufferhülse (1) in dem dem Pufferteller (6) zugewandten Endbereich.

6. Puffer nach einem der vorhergehenden Ansprüche, **dadurch gekennzeichnet, dass** der Pufferteller (6) mitsamt dem daran angeordnete Kragen (8) aus Gusseisen gefertigt ist, während das Stösselrohr (3) aus einem anderen Material, vorzugsweise aus Stahl gefertigt ist.

7. Puffer nach einem der vorhergehenden Ansprüche, **dadurch gekennzeichnet, dass** der sich radial zum Pufferteller (6) hin erweiternde Abschnitt (4) durch plastische Kaltverformung erzeugt ist.

8. Puffer nach einem der vorhergehenden Ansprüche, **dadurch gekennzeichnet, dass** die Wandstärke des am Pufferteller (6) angeordneten Kragens (8) derart auf die Wandstärke des Stösselrohrs (3) abgestimmt ist, dass sich die beiden Teile (3, 8) durch die beim Reibschweissvorgang erzeugte Wärme in Bezug auf ihre Schmelztemperatur weitgehend gleichmässig erwärmen.

9. Puffer nach einem der vorhergehenden Ansprüche, **dadurch gekennzeichnet, dass** die Höhe (h) des Kragens (8) in axialer Richtung mindestens 1/20, insbesondere mindestens 1/10 des äusseren Durchmessers des Stösselrohrs (3) beträgt.

10. Verfahren zur Herstellung eines gemäss dem Anspruch 1 ausgebildeten Puffers, **dadurch gekennzeichnet, dass** das Stösselrohr (3) mittels Reibschweissung an dem Kragen (8) des Puffertellers (6) angeschweisst wird, wobei das Stösselrohr (3) in dem dem Pufferteller (6) zuzuwendenden Endbereich zuerst durch plastische Verformung in radialer Richtung aufgeweitet wird, und dass danach der Pufferteller (6) mittels Reibschweissung an dem sich radial erweiternden Bereich des Stösselrohrs (3) angeschweisst wird.

11. Verfahren nach Anspruch 10, **dadurch gekennzeichnet, dass** das Stösselrohr (3) in dem dem Pufferteller (6) zuzuwendenden Endbereich durch plastische Kaltverformung in radialer Richtung aufgeweitet wird.

12. Verfahren nach Anspruch 10 oder 11, **dadurch gekennzeichnet, dass** der Pufferteller (6) derart mit dem Stösselrohr verschweisst wird, dass sowohl auf der Innenseite wie auch auf der Aussenseite ein umlaufender Schweisswulst (20, 21) gebildet wird.

## Claims

1. Buffer for rail vehicles, having a buffer sleeve (1) which is to be attached to the rail vehicle and having an axially movable buffer plunger (2) which is supported on the buffer sleeve (1) via a damping device (12) and has a plunger tube (3), and a buffer plate (6), which is welded thereto on the end side, **characterized in that** the buffer plate (6) is provided on its rear face with a collar (8) which extends in the axial direction and whose diameter is matched to the diameter of the plunger tube (3), with the plunger tube (3) being attached to the collar (8) by means of a friction welded joint (19), and with the plunger tube (3) being provided in the end area, facing the buffer plate (6), with a radially widening section (4) which widens radially such that a free space (5) is created for the weld bead (21), which is created on the inner face during friction welding, and into which the inner weld bead (21) can extend.

2. Buffer according to Claim 1, **characterized in that** the free space (5) which is provided in order to lift the inner weld bead (21) widens conically towards the collar (8).

3. Buffer according to Claim 1 or 2, **characterized in that** the plunger tube (3) is predominantly hollow-cylindrical, and the inner weld bead (21) is recessed in the radial direction with respect to the inner, cylindrical envelope surface of the plunger tube (3).

4. Buffer according to one of the preceding claims, **characterized in that** the buffer plate (6) is provided with a recess (10) which is radially surrounded by the collar (8) and into which the buffer sleeve (1) can extend when the buffer springs inwards.

5. Buffer according to Claim 4, **characterized in that** the internal diameter of the recess (10) is greater than the external diameter of the buffer sleeve (1) in the end area facing the buffer plate (6).

6. Buffer according to one of the preceding claims, **characterized in that** the buffer plate (6) together with the collar (8) arranged on it is manufactured from cast iron, while the plunger tube (3) is manufactured from a different material, preferably from steel.

7. Buffer according to one of the preceding claims, **characterized in that** the section (4) which widens radially towards the buffer plate (6) is produced by cold plastic deformation.

8. Buffer according to one of the preceding claims, **characterized in that** the wall thickness of the collar (8) which is arranged on the buffer plate (6) is matched to the wall thickness of the plunger tube (3) such that the two parts (3, 8) are heated largely uniformly with respect to their melting temperature, by the heat that is produced during the friction welding process.

9. Buffer according to one of the preceding claims, **characterized in that** the height (h) of the collar (8) in the axial direction is at least 1/20, in particular at least 1/10, of the external diameter of the plunger tube (3).

10. Method for production of a buffer designed according to Claim 1, **characterized in that** the plunger tube (3) is welded by means of friction welding to the collar (8) of the buffer plate (6), with the plunger tube (3) first of all being widened by plastic deformation in the radial direction in the end area intended to face the buffer plate (6), and **in that**, after this, the buffer plate (6) is welded by means of a friction welding to the radially widening area of the plunger tube (3).

11. Method according to Claim 10, **characterized in that** the plunger tube (3) is widened by plastic cold deformation in the radial direction in the end area intended to face the buffer plate (6).

12. Method according to Claim 10 or 11, **characterized in that** the buffer plate (6) is welded to the plunger tube such that a circumferential weld bead (20, 21) is formed both on the inner face and on the outer face.

## Revendications

1. Tampon pour véhicules sur rail avec un faux tampon (1) à fixer sur le véhicule sur rail et une tige de tampon (2) mobile axialement, en appui par un dispositif d'amortissement (12) contre le faux tampon (1) avec un tube de tige (3) et un disque de tampon (6) soudé à celui-ci côté extrémité, **caractérisé en ce que** le disque de tampon (6) est pourvu sur son côté arrière d'un collet (8) s'étendant dans le sens axial, dont le diamètre est ajusté au diamètre du tube de tige (3), dans lequel le tube de tige (3) est fixé au moyen d'une soudure par friction (19) sur le collet (8) et dans lequel le tube de tige (3) est pourvu dans la zone d'extrémité tournée vers le disque de tampon (6) d'une section (4) s'étendant radialement qui est élargie radialement de sorte qu'un espace libre (5) soit créé pour le cordon de soudure (21) produit lors de la soudure par friction sur le côté intérieur, dans lequel le cordon de soudure (21) intérieur peut s'étendre.

2. Tampon selon la revendication 1, **caractérisé en ce que** l'espace libre (5) prévu pour la réception du cordon de soudure (21) intérieur s'étend coniquement vers le collet (8).

3. Tampon selon la revendication 1 ou 2, **caractérisé en ce que** le tube de tige (3) est réalisé principalement de manière cylindrique et creuse et le cordon de soudure (21) intérieur est redécalé dans le sens radial par rapport à la surface enveloppe intérieure, cylindrique du tube de tige (3).

4. Tampon selon l'une quelconque des revendications précédentes, **caractérisé en ce que** le disque de tampon (6) est pourvu d'un évidement (10) qui est radialement entouré par le collet (8) et dans lequel le faux tampon (1) peut s'étendre lors de la compression du tampon.

5. Tampon selon la revendication 4, **caractérisé en ce que** le diamètre intérieur de l'évidement (10) est supérieur au diamètre extérieur du faux tampon (1) dans la zone d'extrémité tournée vers le disque de tampon (6).

6. Tampon selon l'une quelconque des revendications précédentes, **caractérisé en ce que** le disque de tampon (6) avec le collet (8) disposé dessus est fabriqué en fonte, alors que le tube de tige (3) est fabriqué en un autre matériau, de préférence en acier.

7. Tampon selon l'une quelconque des revendications précédentes, **caractérisé en ce que** la section (4) s'étendant radialement vers le disque de tampon (6) est générée par déformation plastique à froid.

8. Tampon selon l'une quelconque des revendications précédentes, **caractérisé en ce que** l'épaisseur de paroi du collet (8) disposé sur le disque de tampon (6) est ajustée à l'épaisseur de paroi du tube de tige (3) de sorte que les deux parties (3, 8) s'échauffent essentiellement uniformément par la chaleur générée lors du processus de soudage par friction par rapport à leur température de fusion.

9. Tampon selon l'une quelconque des revendications précédentes, **caractérisé en ce que** la hauteur (h) du collet (8) s'élève dans le sens axial au moins à 1/20, en particulier au moins 1/10 du diamètre extérieur du tube de tige (3).

10. Procédé de fabrication d'un tampon réalisé selon la revendication 1, **caractérisé en ce que** le tube de tige (3) est soudé au moyen de la soudure par friction sur le collet (8) du disque de tampon (6), dans lequel le tube de tige (3) est élargi dans la zone d'extrémité à diriger vers le disque de tampon (6) tout d'abord par déformation plastique dans le sens radial, et **en ce qu'**après, le disque de tampon (6) est soudé au moyen de la soudure par friction sur la zone s'étendant radialement du tube de tige (3).

11. Procédé selon la revendication 10, **caractérisé en ce que** le tube de tige (3) est élargi dans la zone d'extrémité à diriger vers le disque de tampon (6) par déformation plastique à froid dans le sens radial.

12. Procédé selon la revendication 10 ou 11, **caractérisé en ce que** le disque de tampon (6) est soudé au tube de tige de sorte qu'un cordon de soudure (20, 21) périphérique soit formé sur le côté intérieur ainsi que sur le côté extérieur.
